# EUROPEAN PATENT SPECIFICATION

(11) **EP 2 305 509 B1**
(45) Date of publication and mention of the grant of the patent: **24.01.2018**
(21) Application number: 10251487.4
(22) Date of filing: 24.08.2010
(51) Int. Cl.: B60L 9/22, B60L 11/12, B60L 11/18

(54) **Control system of electric vehicle**
Steuersystem für ein elektrisches Fahrzeug
Système de commande de véhicule électrique

(30) Priority: 30.09.2009 JP 2009225874
(43) Date of publication of application: 06.04.2011
(73) Proprietor: Hitachi, Ltd., Chiyoda-ku Tokyo 100-8280 (JP)
(72) Inventor: Oishi, Ryoichi, Tokyo 100-8220 (JP); Shimada, Motomi, Tokyo 100-8220 (JP); Sato, Tadanori, Tokyo 100-8220 (JP); Sekine, Toshio, Ibaraki-ken 312-8506 (JP); Toyota, Eiichi, Ibaraki-ken 312-8506 (JP)
(74) Representative: Gill, Stephen Charles

(56) References cited:
- EP-A1- 2 045 116
- JP-A- S5 932 305
- JP-A- 2008 228 451
- JP-A- 2009 089 503

## Description

### BACKGROUND OF THE INVENTION

### Field of the invention

The present invention relates to a control system disposed on board a vehicle such as a railway vehicle, and specifically, relates to a control system of an electric vehicle having an electric storage device disposed on an input side of a power converter device for driving a main motor.

### Description of the related art

Conventional electric railway systems obtain power from electric power lines to drive the vehicle. However, there are sections in which the electric power line cannot be installed due for example to the condition of the railroad or neighboring facilities, and when the vehicle enters such sections, power cannot be supplied to the vehicle. Therefore, if the vehicle stops in such electric power line non-installed sections, the vehicle cannot move any further. Therefore, driving techniques such as acquiring a predetermined speed before entering the section having no electric power line and passing through the section via coasting of the vehicle or the like are applied to cover for the traveling of the vehicle in the section where no power is supplied.

However, the driver must bear a great burden to perform such driving technique based on this method. Further, when the vehicle is passing through the section having no electric power lines, power cannot be supplied to the auxiliary power supply, and fluorescent lights and air conditioning within the vehicle may be stopped.

Further, regarding regenerative braking in which power is generated via the main motor for driving during deceleration and the generated power is used for powering other vehicles and the like, when contact break between the power collector and the electric power line occurs during regenerative braking, there was a drawback in that the power generated via the main motor could not be returned to the electric power line and the regenerative brake could not be applied (cancellation of regenerative brake).

Based on the above reasons, a system for solving the problem of not having power supplied in sections where the electric power lines are not installed and the problem of cancellation of the regenerative brake is proposed, in which an electric storage device such as a secondary battery having a sufficiently high charge-discharge performance and a minimum charging capacity and a switching device for controlling the same are disposed on board the vehicle.

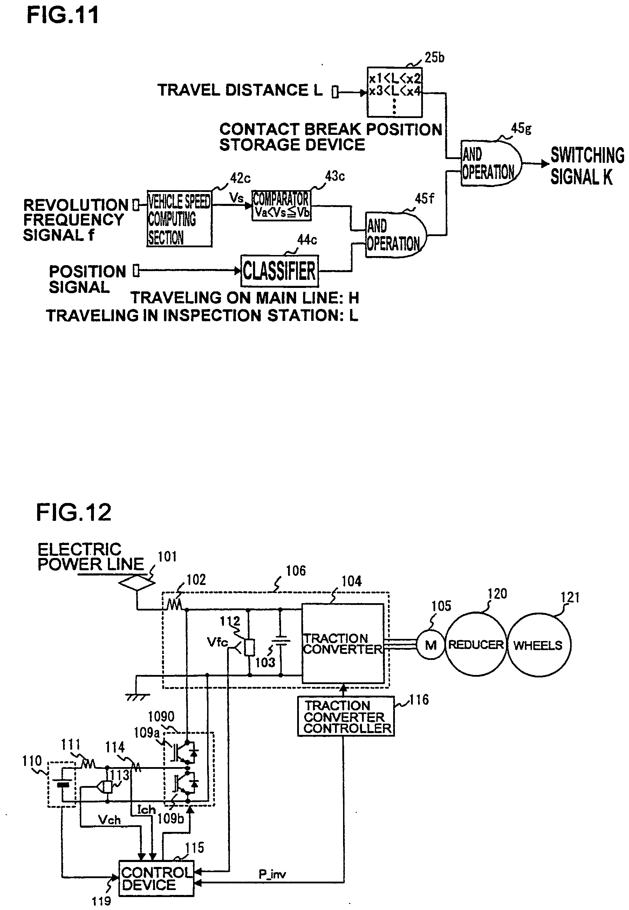

For example, Japanese patent application laid-open publication No. 2008-228451 (patent document 1) discloses an example of a drive system of a railway vehicle having a power storage device for absorbing regenerative power in addition to an inverter means disposed on board the vehicle. FIG. 12 shows one example of an arrangement of a device in which the power storage device for absorbing the regenerative power is disposed on the inverter device on board the vehicle. During regenerative braking, the power generated via a main motor 105 is returned via a power collector 101 to an electric power line, wherein if contact break of the electric power line and the power collector 101 occurs and current path is interrupted, regenerative brake current flows into the filter capacitor 103, increasing both end voltages of the filter capacitor 103. At this time, based on the variation ratio of detected values of both end voltages of the filter capacitor 103 detected via a DC voltage detector 112, charge control for absorbing the regenerative power via the electric storage device 110 is started instantly. The charge current flowing into the electric storage device 110 is controlled by switching a switching device 1090. Thereby, even when contact break occurs during regenerative braking, it becomes possible to suppress the increase of filter capacitor voltage and to prevent the cancellation of regenerative brake.

The switching device 1090 shown in FIG. 12 is formed for example of switching elements such as IGBTs, wherein if the charge-discharge current of the electric storage device is controlled via the switching device, the loss caused via switching operation of the switching device consumes energy. Even if the switching device performs control setting a target value of charge-discharge current of the electric storage device to 0A, the above-mentioned energy consumption still occurs, since the switching operation causes thermal loss of the IGBT elements and charge-discharge loss due to minute charging and discharging.

According further to the prior art, the switching device performed switching operation regardless of whether the vehicle is traveling in a contact break section or not, in order to cope with the sharp fluctuation of the filter capacitor voltage.

Therefore, the conventional system had a drawback in that the switching operation of the switching device was continued even in sections other than the contact break sections where filter capacitor voltage is not fluctuated, and high energy loss was caused via switching.
EP 2045116 A proposes an electric-vehicle controller that prevents energy stored in a power storage unit being discharged when a collision, a derailment, or breakage of an overhead line occurs. JP S59 32305 A proposes automatically opening and closing an electric vehicle main circuit switch before and after an AC-AC section.

### SUMMARY OF THE INVENTION

The present invention aims at solving the problems of the prior art by providing a control system of an electric vehicle capable of suppressing energy loss, by shortening the switching operation period of the switching device and stopping the switching operation of the switching device when the vehicle exits a contact break section and enters a section in which electric power lines are installed.

In order to solve the above-mentioned problems, the control system of an electric vehicle according to claim 1 is provided.

In the present invention, "electric power lines" include overhead wires for supplying power to the vehicle and rails supplying power via a third rail system. Furthermore, "contact break" refers for example to a state in which power cannot be supplied to the vehicle since electric power lines or power feed rails are not disposed, a state in which power supply from a power feed rail is interrupted at a junction/branch point of rails, or a state in which power supply is interrupted due to contact break between the pantograph and the electric power line caused by the vibration of the electric power line, which is known to occur via test run and the like. Further, "travel information" includes travel distance information, travel position information and travel speed information of the vehicle.

According to the present invention, the switching operation of the switching device is stopped when the vehicle passes a contact break section, so that the energy loss caused by the switching operation of the switching device can be cut down and efficient use of energy can be realized.

### BRIEF DESCRIPTION OF THE DRAWINGS

FIG. 1 shows a first embodiment of the present invention;
FIG. 2 shows an example of arrangement of the power converter of the vehicle traveling in an AC section;
FIG. 3 is a block diagram showing an example of arrangement of a switching signal output device 23 illustrated in FIG. 1;
FIG. 4 is a block diagram showing an example of arrangement of a charge-discharge controller 15 illustrated in FIG. 1;
FIG. 5 is a block diagram showing an example of arrangement of a voltage command value computing unit illustrated in FIG. 4;
FIG. 6 is a view showing an operational waveform of a state in which the present invention is applied;
FIG. 7 is a view showing a second embodiment of the present invention;
FIG. 8 is a block diagram showing an example of arrangement of the switching signal output device 23 illustrated in FIG. 8;
FIG. 9 is a view showing an operational waveform of a state in wihch a second embodiment of the present invention is applied;
FIG. 10 is a view showing a third embodiment of the present invention;
FIG. 11 is a block diagram illustrating an example of arrangement of the switching signal output device 23 according to the third embodiment of the present invention;
FIG. 12 shows an example of an arrangement in which an electric storage device for absorbing regenerative power is disposed in addition to a traction converter on board a vehicle according to a prior art example;
FIG. 13 is a block diagram illustrating an example of arrangement of the switching signal output device 23 according to the third embodiment of the present invention;
FIG. 14 is a block diagram illustrating another example of the switching signal output device 23 according to the third embodiment of the present invention; and
FIG. 15 is a block diagram illustrating another example of arrangement of the switching signal output device 23 according to the third embodiment of the present invention.

### DETAILED DESCRIPTION OF THE PREFERRED EMBODIMENTS

Now, the various preferred embodiments for carrying out the present invention will be described with reference to the drawings. The following embodiments are illustrated taking an electric power line as an example, but the embodiments can also be similarly applied to vehicles receiving power from a power feed rail via a feeding device.

### [Embodiment 1]

Now, the preferred embodiments of the present invention will be described with reference to the drawings.

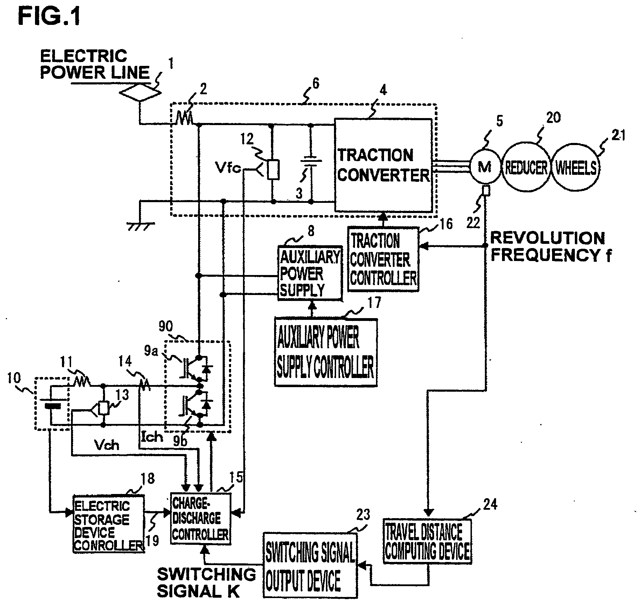

The first preferred embodiment of the present invention will be described with reference to FIG. 1, taking as an example a vehicle traveling in a DC section in which DC power is supplied through the electric power line. As illustrated, a power collector 1 is electrically connected to the electric power line, a traction converter 4 is connected to the electric power line via a filter reactor 2, wherein a filter capacitor 3 is connected to an input side of the traction converter 4 and a main motor 5 is connected to an output side of the traction converter 4. In the case of a vehicle running in a DC section, a power converter 6 is composed of the filter reactor 2, the traction converter 4 and the filter capacitor 3.

In addition, an auxiliary power supply 8 is connected in parallel with the filter capacitor 3. In FIG. 1, the auxiliary power supply 8 is connected between the filter reactor 2 and the filter capacitor 3, but the auxiliary power supply can be disposed at any position as long as it is connected in parallel with the filter capacitor 3 between the power collector 1 and the traction converter.

Further, a switching device 90 is connected in parallel with the filter capacitor 3. The switching device 90 is formed by connecting an emitter of a first IGBT 9a and a collector of a second IGBT 9b, each IGBT having connected thereto in parallel a free wheel diode. The collector of the IGBT 9a is connected between the filter reactor 2 and the traction converter 4, and the emitter of the IGBT 9b is connected to a DC low potential side of the traction converter 4. An electric storage device 10 selected to have a lower terminal voltage than a minimum controllable DC input voltage by the traction converter 4 and a main smoothing reactor 11 are connected between the collector and the emitter of the IGBT 9b. In FIG. 1, the switching element of the switching device 90 is illustrated as an IGBT, but the type of the switching element is not restricted thereto.

Further, a DC voltage detector 12 for detecting a voltage value (Vfc) of a contact point between the DC side of the traction converter 4 and the switching device 90, a secondary battery DC voltage detector 13 for detecting the value of terminal voltage (Vch) of the electric storage device 10, and an electric storage device DC current detector 14 for detecting the value of current (Ich) output from the electric storage device 10 to the collector of the IGBT 9b are disposed. Moreover, a charge-discharge controller 15 is connected to the switching device 90, a traction converter controller 16 is connected to the traction converter 4, an auxiliary power supply controller 17 is connected to the auxiliary power supply 8, an electric storage controller 18 is connected to the electric storage device 10, and an information transmission means 19 is disposed between the electric storage controller 18 and the charge-discharge controller 15. The electric storage controller 18 is arranged so as to detect the amount of charge and the inner temperature of the electric storage device 10, compute the maximum allowable charge-discharge current, and send these information to the charge-discharge controller 15.

Moreover, a revolution frequency signal f is output from a revolution frequency detector 22 for detecting the revolution frequency of the main motor 5, which is entered to a travel distance computing device 24. It is also possible to adopt an arrangement in which themainmotor 5 is a synchronousmotor, wherein a rotation angle is detected instead of the revolution frequency, but in that case, the revolution frequency f can be computed based on the amount of change of rotation angle per unit time.

The travel distance computing device 24 computes the vehicle speed based on the revolution frequency signal f, computes the travel distance of the vehicle by integrating the vehicle speed, and outputs the travel distance information to a switching signal output device 23. The switching signal output device 23 is equipped with a contact break position storage device storing in advance the contact break position of the section of the line on which the vehicle travels, and predicts the entry of the vehicle to a contact break section by verifying the information on the travel distance entered from the travel distance computing device 24 and the information in the contact break position storage device. When it is determined that the vehicle is entering a contact break section, the device outputs a switching signal K. The charge-discharge controller 15 starts or stops the switching of the switching device 90 based on the switching signal K.

Based on the above-described arrangement, the switching operation of the switching device 90 is turned on and off in response to the travel distance, to thereby permit switching operation of the switching device 90 only when the vehicle enters the contact break section, and to stop the switching operation of the switching device 90 when the vehicle enters a section where contact break does not occur.

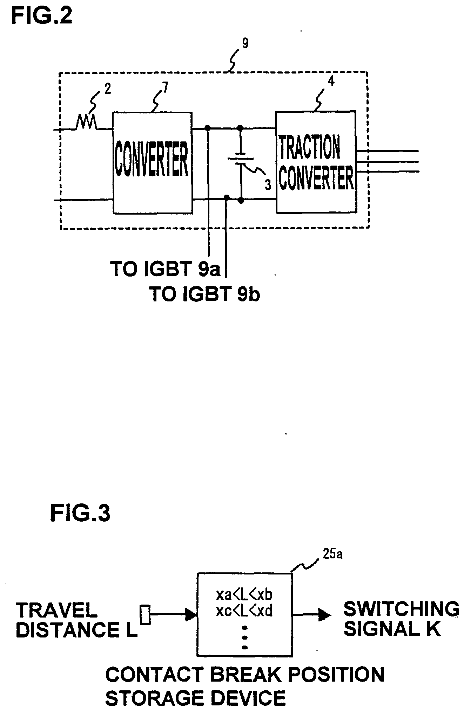

FIG. 2 is a view showing an example of arrangement of the power converter 6 of the vehicle traveling in an AC section in which AC power is supplied through the electric power line. When AC power is supplied through the electric power line, the power converter 6 is composed of a converter 7, a filter capacitor 3 and a traction converter 4, as shown in FIG. 2. In this case, the switching device 90 is connected to a DC portion of the power converter 6, as illustrated.

FIG. 3 is a view showing the arrangement of the switching signal output device 23 of FIG. 1. The switching signal output device 23 comprises a contact break position storage device 25a storing in advance the travel position in which contact break occurs, wherein by entering the travel distance calculated by the travel distance computing device and verifying the same, it is determined whether the vehicle is traveling in a contact break section or not. If it is determined that the vehicle is traveling in a section in which contact break occurs, the switching signal K is set to high level, and the operation of the switching device 90 is permitted. In contrast, if the vehicle is traveling in a section where contact break does not occur, the switching signal K is set to low level, and the switching device 90 is not activated.

A drawback of the prior art line section of a third rail system in which power is fed through a power feed rail is that a crossover section often disposed near a station disconnects the third rail, according to which power cannot be supplied to the vehicle. In order to overcome the problem, the contact break position storage device 25a can store the position of the crossover section as a contact break section, and the operation of the switching device 90 can be stopped while the vehicle having exited the crossover section near the station from which the vehicle departed is traveling in a section prior to entering the crossover section disposed before the next station.

An actual example will now be described. The switching signal output device 23 sets a distance X1 from the departing station to where the crossover section ends as a first contact break section, and sets a section between a distance X2 from the departing station to the entrance of a crossover section disposed before the next station and a distance X3 from the departing station to the next station as a second contact break section. Then, the travel distance is entered to the contact break position storage device, and whether the vehicle is traveling in a crossover section or not is determined. When it is determined that the vehicle is traveling within the crossover section (0 < L < X1 or X2 < L < X3), the switching signal K is set to high level, and the operation of the switching device 90 is permitted. In contrast, when the vehicle is traveling within a section where contact break does not occur (section of X1 < L < X2), the switching signal K is set to low level, and the switching of the switching device 90 is not permitted.

Further, other than the crossover section, a section in which contact break between the electric power line and the pantograph frequently occurs found during a test run or the like is stored as a contact break section in the contact break section storage device, so as to output the switching signal K in a similar manner as the above-described example.

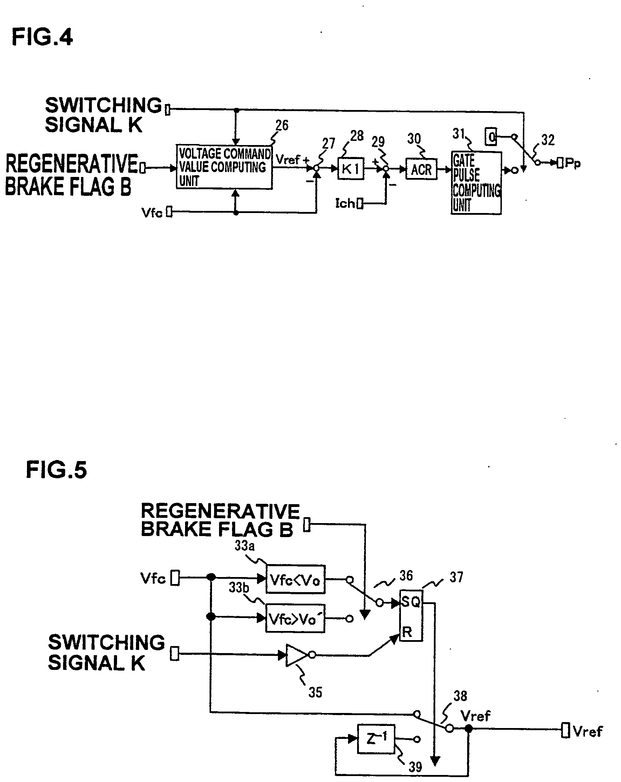

FIG. 4 illustrates an example of arrangement of a charge-discharge controller 15 according to FIG. 1. The charge-discharge controller 15 performs charge-discharge control so that a DC-side voltage value Vfc of the traction converter 4 follows the DC voltage command value output from a voltage command value computing unit 26. The operation of the charge-discharge controller 15 will be described below.

The DC-side voltage value Vfc of the traction converter 4 detected by the DC voltage detector 12 is subtracted from a DC voltage command value Vref output from the voltage command value computing unit 26 in a subtractor 27, and the obtained voltage difference is multiplied by an appropriate coefficient K1 in a coefficient unit 28, to thereby compute a switch current target value Ich P1 determined in proportion to the voltage difference.

If the DC-side voltage value Vfc is greater than the DC voltage command value Vref, the switch current target value Ich P1 of the switching device 90 becomes a negative value. Therefore, as shown later, operation is performed in the direction to take in current from the DC side of the traction converter 4 to the electric storage device, that is, to lower the DC-side voltage value Vfc.

In contrast, if the DC-side voltage value Vfc is smaller than the DC voltage command value Vref, the switch current target value Ich P1 of the switching device 90 becomes a positive value, so that operation is performed in the direction to send current from the electric storage device to the DC-side of the traction converter 4, so as to raise the DC-side voltage value Vfc. With respect to the switch current target value Ich P1, an electric storage device current value Ich detected via a DC current detector 14 is subjected to feedback, setting the direction in which discharge is performed from the electric storage device 10 as positive, and the difference between the switch current target value Ich p1 and the electric storage device current value Ich is taken out and subjected to proportional integral or other processes in the current control unit (ACR) 30 to obtain a conduction ratio command, which is output to a gate pulse computing unit. By the gate pulse computing unit 31 outputting a pulse signal Pp having a pulse width proportional to the conduction ratio command to the switching device 90, charge-discharge control is performed so that the DC-side voltage value Vfc of the traction converter follows the DC voltage command value Vref output from the voltage command value computing unit 26.

Further, a switching unit 32 is disposed at a final stage of the charge-discharge controller 15, which is arranged to be switched via the switching signal K illustrated in FIG. 3. Thereby, when the switching signal K is set to high, that is, when the vehicle is traveling in the contact break section, the output of the gate pulse computing unit 31 is selected and output to the switching device 90 as a gate pulse signal, while on the other hand, when the switching signal K is set to low, that is, when the vehicle is traveling in a section where contact break does not occur, zero is selected and output to the switching device 90 as gate pulse signal.

As described, when the vehicle is traveling in a section where contact break does not occur, the gate pulse signal is set to zero and the operation of the switching device 90 is set to stopped state, according to which switching loss can be suppressed.

FIG. 5 is a view showing an example of arrangement of the voltage command value computing unit 26 illustrated in FIG. 4. When a high switching signal K s entered, the voltage command value computing unit 26 outputs the voltage of the filter capacitor 3 immediately before contact break occurs as the DC voltage command value Vref.

The voltage command value computing unit 26 enters the voltage Vfc of the filter capacitor 3 to comparators 33a and 33b, and compares the same with reference voltage value V0 or V0' set in advance. At this time, the reference voltage value V0 set to the comparator 33 is lower than the electric power line voltage and higher than a minimum operation voltage of the traction converter 4, while the reference voltage value V0' set to the comparator 34 is higher than the electric power line voltage and lower than the filter capacitor voltage causing cancellation of regenerative brake. Then, in order to detect the start of regenerative braking, a regenerative brake flag B not shown in FIG. 1 is entered to the charge-discharge controller 15 from the traction converter controller 16, and the switching unit 36 is switched via the regenerative brake flag B, so that the output of the comparator 33a is entered to a set side (S side) of a flip-flop circuit 37 during powering and coasting, and the output of the comparator 33b is entered thereto during regenerative braking.

Thus, when contact break occurs during powering or coasting and the filter capacitor voltage Vfc becomes smaller than V0, or when contact break occurs during regenerative braking and the filter capacitor voltage Vfc exceeds V0', the high signal output from the comparator 33 or 34 is entered to the flip-flop circuit 37, according to which the switching unit 38 is switched. Further, a delay element 39 is disposed as shown in FIG. 5, wherein when contact break occurs and the switching unit 38 is switched via the output signal from the flip-flop circuit 37, the filter capacitor voltage Vfc immediately prior to occurrence of a contact break is output as the DC voltage command value Vref.

By outputting the filter capacitor voltage Vfc immediately prior to occurrence of a contact break as the DC voltage command value Vref, the voltage prior to fluctuation of the filter capacitor voltage caused by contact brak can be used as the control command value, and the filter capacitor voltage can thereby be stabilized.

Further, a signal having inverted the switching signal K in an inverting unit 35 is entered to the reset side (R side) of the flip-flop circuit 37, and during the time in which the switching signal K is not output, the output of the flip-flop circuit 37 is set to zero, that is, the filter capacitor voltage Vfc of is output as it is as the DC voltage command value Vref.

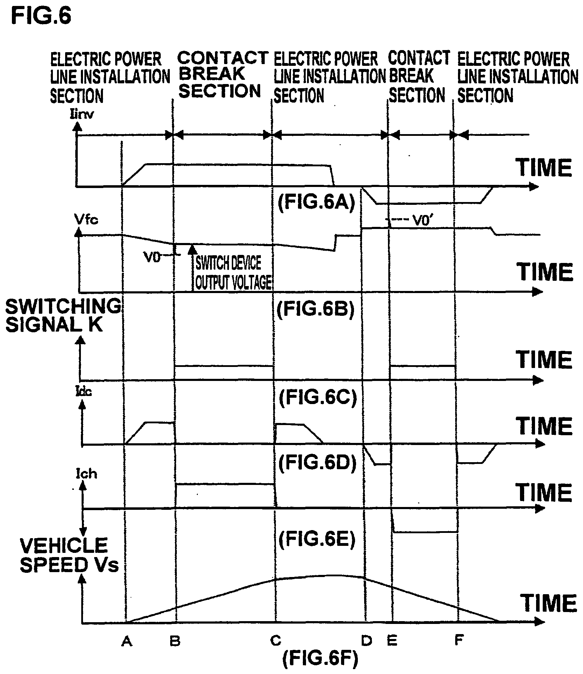

FIG. 6 is a view illustrating the charge-discharge operation when the electric vehicle adopting the control system according to the present invention passes a contact break section.

It is assumed that powering is started at point A which is a point where power can be supplied from the electric power line. At this time, the electric power line voltage is received at point A, so as shown in FIG. 6b, the input voltage Vfc of the traction converter 4 is substantially equal to the electric power line voltage.

Next, it is assumed that the vehicle has entered the contact break section illustrated in section B-C in a powering state while taking in a predetermined amount of current. The contact break position storage device illustrated in FIG. 3 stores section B-C as a contact break section, and as shown in FIG. 6C, the system predicts that the vehicle enters a contact break section immediately before the vehicle reaches point B, and outputs switching signal K from the switching signal output device 23, based on which the switching of the switching device 90 is started. At this time, since the switching signal K is output before the vehicle reaches point B, switching can be started before the vehicle enters the contact break section, so that sudden fluctuation of filter capacitor voltage Vfc within the contact break section can be suppressed.

As described, even after switching operation of the switching device 90 is started, the filter capacitor voltage Vfc will not fall below the voltage set value V0 as long as power is supplied from the electric power line, so that the switching device 90 controls switching so as not to perform charging and discharging, and power will not be discharged from the electric storage device 10. After the vehicle enters point B, that is, after contact break occurs, the current Idc flowing through the power collector 1 becomes zero as shown in FIG. 6D, and the input voltage Vfc of the traction converter 4 will drop suddenly as shown in FIG. 6B, but when the filter capacitor voltage Vfc drops to below a control target V0 of the switching device 90, discharge from the electric storage device 10 is started so as to maintain the filter capacitor voltage Vfc to a voltage value of the state before contact break occurs based on the constant voltage control function of the charge-discharge controller 15 illustrated in FIG. 4, and current is supplied from the electric storage device 10 as shown in section B-C of FIG. 6E.

Next, when the vehicle re-enters a section in which the electric power line is installed at point C, the switching signal K is set to low, the switching operation of the switching device 90 is stopped, and as shown in FIG. 6E, the discharge of the electric storage device 10 is stopped. Since the electric power line voltage is reapplied to the traction converter 4, as shown in FIG. 6B, the current Iinv entered to the traction converter 4 becomes a current Idc supplied from the electric power line.

Next, it is assumed that regenerative braking is started at point D where power can be supplied from the electric power line. At this time, from point D onward, as shown in FIG. 6B, the filter capacitor voltage Vfc becomes higher than the electric power line voltage, and power is returned to the electric power line.

Next, it is assumed that the vehicle enters a contact break section in section E-F while returning a predetermined current to the electric power line. As shown in FIG. 6C, immediately before reaching point E, the switching signal K is output from the switching signal output device 23, and switching of the switching device 90 is started.

At this time, since the switching signal K is output before the vehicle reaches point E, switching can be started before the vehicle enters the contact break section, so that the rapid fluctuation of the filter capacitor voltage Vfc within the contact break section can be suppressed.

As described, even after switching of the switching device 90 is started, the filter capacitor voltage Vfc will not exceed the voltage set value V0' while power can be returned to the electric power line, so that the switching device 90 can control switching so as not to perform charging and discharging operation, according to which power cannot be charged to the electric storage device 10.

After the vehicle enters point E, that is, after contact break occurs, the current Idc flowing through the power collector 1 loses its destination and flows into the filter capacitor 3, according to which the filter capacitor voltage Vfc will rise rapidly as shown in FIG. 6B, but when the filter capacitor voltage Vfc reaches the control target V0' of the switching device 90, charging is started so as to maintain Vfc to a voltage value before contact break occurs by the constant voltage control function of the charge-discharge controller 15 shown in FIG. 4, and current will be flown through the switching device 90 to the electric storage device 10 as shown in section E-F of FIG. 6E.

Thereafter, when the vehicle reenters a section in which electric power line is disposed at point F, the switching signal K is set to low, and as shown in FIG. 6E, the switching operation of the switching device 90 is stopped and the charging of the electric storage device 10 is stopped. Since the regenerative power can be returned to the electric power line, the DC current Iinv output from the traction converter 4 becomes a current Idc flowing to the electric power line.

The present embodiment enables to perform switching operation by the switching device 90 when the vehicle enters the contact break section, and to stop the switching operation of the switching device 90 after exiting the contact break section.

The charge-discharge operation during contact break while the vehicle is in a powering state or a regenerative braking state has been described according to the present embodiment, but even if the vehicle enters the contact break section during coasting, the Vfc will drop rapidly similar to point B of FIG. 6B since power supply to the auxiliary power supply 8 is interrupted, so that power is supplied from the electric storage device 10 to the auxiliary power supply 8 in a similar manner as when contact break occurs during powering.

The present embodiment illustrated an example in which the travel distance of the vehicle is computed based on the revolution frequency of the motor, but it is also possible to apply the present invention to an example in which the traveling position of the vehicle is detected via a GPS device or by receiving positional data from a ground coil, and to compare the same with the contact break position stored in the contact break position storage device, to thereby output the switching signal K.

### [Embodiment 2]

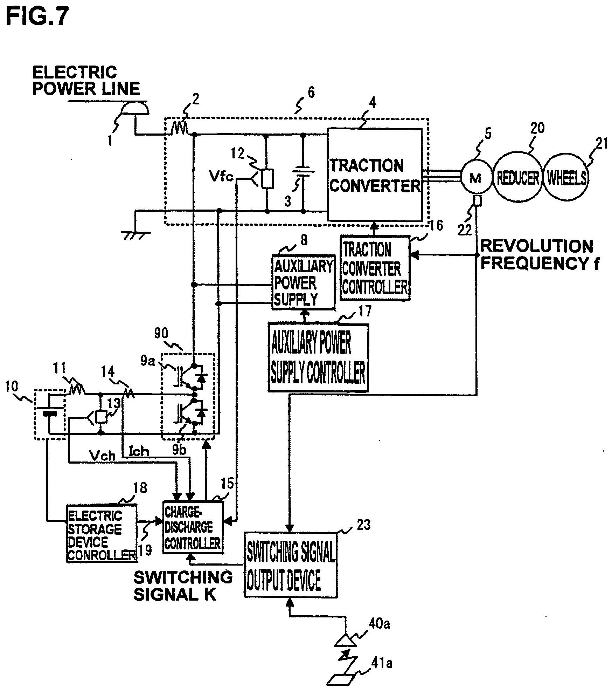

FIG. 7 illustrates a second embodiment of the present invention, which is specifically suitably applied to a vehicle having power fed via a third rail system. One problem of the conventional third rail system is that the third rail is interrupted by a crossover section or the like, by which power cannot be supplied to the vehicle. The vehicle may be subjected to speed limitation when traveling in a crossover section, so according to the present embodiment, a method for operating and stopping the switching device 90 based on the vehicle speed is proposed in the present embodiment.

As shown in the drawing, the system comprises a power collector 1 connected electrically with the electric power line, a traction converter 4 connected to the electric power line via a filter reactor 2, a filter capacitor 3 connected to the input side of the traction converter 4, and a main motor 5 connected to the output side of the traction converter 4.

Further, a switching device 90 is connected in parallel with the filter capacitor 3. The switching device 90 is formed by connecting an emitter of a first IGBT 9a and a collector of a second IGBT 9b, each IGBT having connected thereto in parallel a free wheel diode. The collector of the IGBT 9a is connected between the filter reactor 2 and the traction converter 4, and the emitter of the IGBT 9b is connected to a DC low potential side of the traction converter 4. An electric storage device 10 selected to have a lower terminal voltage than a minimum controllable DC input voltage value by the traction converter 4 and a main smoothing reactor 11 are connected between the collector and the emitter of the IGBT 9b. In FIG. 7, the switching element of the switching device 90 is illustrated as an IGBT, but the type of the switching element is not restricted thereto.

Further, a DC voltage detector 12 for detecting a voltage value (Vfc) of a contact point between the DC side of the traction converter 4 and the switching device 90, a secondary battery DC voltage detector 13 for detecting the value of terminal voltage (Vch) of the electric storage device 10, and an electric storage device DC current detector 14 for detecting the value of current (Ich) output from the electric storage device 10 to the collector of the IGBT 9b are disposed. Moreover, a charge-discharge controller 15 is connected to the switching device 90. Further, a traction converter controller 16 is connected to the traction converter 4, an electric storage controller 18 is connected to the electric storage device 10, and an information transmission means 19 is disposed between the electric storage controller 18 and the charge-discharge controller 15. The electric storage controller 18 is arranged so as to detect the amount of charge and the inner temperature of the electric storage device 10, compute the maximum allowable charge-discharge current, and send these information to the charge-discharge controller 15.

Moreover, a revolution frequency signal f is output from a revolution frequency detector 22 for detecting the revolution frequency of the main motor 5, which is entered to a switching signal output device 23. It is also possible to adopt an arrangement in which the main motor 5 is a synchronous motor, wherein a rotation angle is detected instead of the revolution frequency, but in that case, the revolution frequency f can be computed based on the amount of change of rotation angle per unit time.

Further, the switching signal output device 23 can have a position signal sent from a ground coil 41a entered via a pickup coil 40a, so as to determine whether the vehicle is traveling on a main line or in an inspection station. The switching signal output device 23 outputs a switching signal K when the vehicle is traveling at low speed on a main line. By having the switching signal K entered to the charge-discharge controller 15, the switching device 90 starts operation.

The above-described arrangement enables to start and stop the operation of the switching device 90 according to vehicle speed, based on which the operation of the switching device 90 is permitted when the vehicle enters a contact break section and the operation of the switching device 90 is stopped after the vehicle exits the contact break section.

The present embodiment illustrates a method in which the output of the switching signal K is determined by using the revolution frequency information of the main motor or the rotation angle information of a synchronous motor, but these signals can be replaced with other information related to the traveling speed of the vehicle.

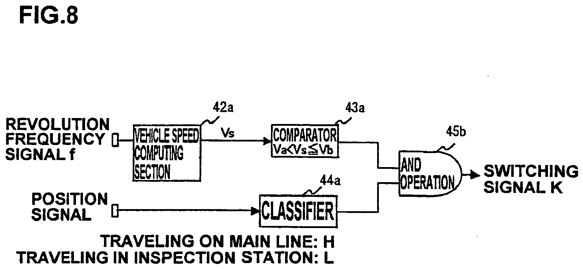

FIG. 8 is a view showing the arrangement of the switching signal output device 23 according to the embodiment shown in FIG. 7.

A revolution speed signal f output from a revolution frequency detector 22 is entered to a vehicle speed computing section 42a, and the vehicle speed Vs is computed based on the revolution speed signal f. The vehicle speed Vs is compared with crossover section passing speed values Va and Vb set in advance and stored in a comparator 43a, and when the speed is greater than Va and smaller than Vb, a high signal is output. Further, a location signal output from a pickup coil 40a is entered to a classifier 44a, and when the vehicle is traveling on a main line, the classifier 44a outputs a high signal. Then, a logic circuit 45b of AND operation outputs an AND operation of the signal of the comparator 43a and the classifier 44a, so as to output a high switching signal Konlywhen the vehicle is traveling on a main line and not exceeding a crossover section passing speed, and to output a low signal in other cases.

Even when applying the second embodiment illustrated in FIGS. 7 and 8, the arrangement of the charge-discharge controller 15 is similar to the arrangement illustrated in FIGS. 4 and 5.

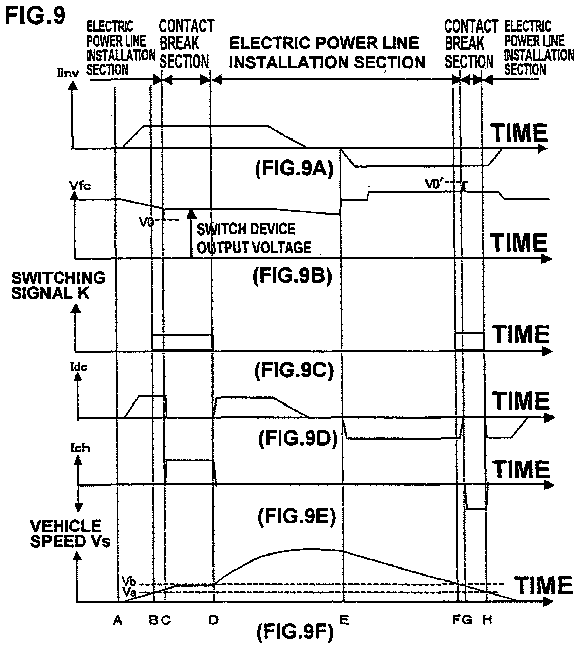

FIG. 9 illustrates an example of the charge-discharge operation when the vehicle adopting the control system of an electric vehicle according to the second embodiment of the present invention passes a contact break section.

At first, the vehicle starts powering at point A which is a location where power can be supplied from the electric power line. Then, at point B, the vehicle speed Vs reaches a crossover section passing speed Va, and as shown in FIG. 9C, the switching signal K is set to high and the switching operation of the switching device 90 is started. However, since the electric power line voltage is received in the section between point B and point C, the filter capacitor voltage Vfc is substantially equal to the electric power line voltage, and greater than V0, so that power will not be discharged from the electric storage device 10.

Next, it is assumed that the vehicle enters a crossover section (contact break section) shown in section C-D while maintaining the vehicle speedbetween a crossover section passing speed Va anda crossover section passing speed Vb. After entering point C, that is, after the occurrence of a contact break, the current Idc flowing through the power collector 1 becomes zero as shown in FIG. 9d, so that the filter capacitor voltage Vfc falls rapidly as shown in FIG. 9b, wherein when the filer capacitor voltage Vfc falls to a control target voltage V0 of the switching device 90, charging is started to maintain the filter capacitor voltage Vfc to a voltage value before contact break occurs by the constant voltage control function of the charge-discharge controller 15 shown in FIG. 4, and current is supplied from the electric storage device 10 as shown in section C-D of FIG. 9E.

Subsequently, when the vehicle passes through the crossover section (passes point D) and the vehicle speed rises, the switching signal is set to low as shown in FIG. 9, and the switching operation of the switching device 90 is stopped as shown in FIG. 9E, by which the discharge from the electric storage device 10 is stopped. Since the electric power line voltage is reapplied to the traction converter 4, the current Iinv entered to the traction converter 4 becomes equal to a current Idc flowing in from the electric power line.

Next, it is assumed that application of regenerative braking is started at point E which is a position in which power can be supplied from the electric power line. At this time, the filter capacitor voltage Vfc becomes higher than the electric power line voltage after point E, and power is returned to the electric power line. Then, when the vehicle speed Vs reaches Vb at point F, the switching signal K is set to high and the switching of the switching device 90 is started as shown in FIG. 9C.

Next, it is assumed that the vehicle has entered a crossover section (contact break section) shown in section G-H while returning a predetermined current to the electric power line. After entering point G, that is, after contact break occurs, the current Idc flowing through the power collector 1 loses its destination and flows into the filter capacitor 3, according to which the input voltage Vfc of the traction converter 4 rises rapidly as shown in FIG. 9B, but when the filter capacitor voltage Vfc is raised to the control target voltage V0' of the switching device 90, charging is started so as to maintain the filter capacitor voltage Vfc to a voltage value before contact break occurs by the constant voltage control function of the charge-discharge controller 15 shown in FIG. 4, and current is flown through the switching device 90 to the electric storage device 10 as shown in section G-H of FIG. 9D.

Thereafter, when the vehicle exits the crossover section at point H, the vehicle speed drops to below Va, the switching signal K is set to low and the switching operation of the switching device 90 is stopped. According to this operation, it becomes possible to permit the switching operation of the switching device 90 only when the vehicle enters a contact break section, and to stop the switching operation of the switching device 90 after the vehicle exits the contact break section.

The present invention has been illustrated taking as an example the charge-discharge operation when the vehicle passes the crossover section at a constant speed or via regenerative braking, but also when the vehicle passes the crossover section via coasting, power feed to the auxiliary power supply 8 is interrupted, and the filter capacitor voltage Vfc falls rapidly similar to point B of FIG. 9b, so that the power is supplied from the electric storage device 10 to the auxiliary power supply 8 in a similar manner as when the vehicle passes the crossover section at a constant speed.

Further according to the present embodiment, the switching signal K is output using the information related to the travel speed and the information related to the travel position of the vehicle, as shown in FIG. 8, but if it is clear that the vehicle only travels on a main line and not in an inspection station, information related to the travel position is not always necessary. In other words, it is possible to determine whether output of the switching signal K is necessary or not based on the information related to the travel speed of the vehicle.

### [Embodiment 3]

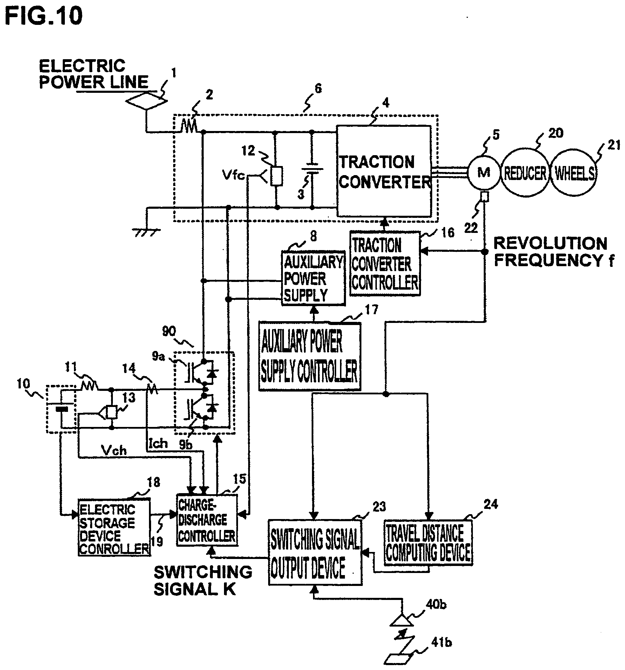

FIG. 10 illustrates a third embodiment of the present invention.

For example, the drawback of a vehicle running in a line section in which a third rail system is adopted as the power feed system is that the third rail is disconnected in a crossover section and power cannot be supplied, but the vehicle does not necessarily pass through the crossover section. Therefore, according to the present embodiment, the switching device 90 is operated and stopped based on the travel distance and the vehicle speed. The present arrangement enables to stop the operation of the switching device 90 even when the vehicle travels straightly without passing the crossover section, or when the vehicle decelerates due to reasons other than passing the crossover section.

As illustrated, the present system comprises a power collector 1 electrically connected to the electric power line, a traction converter 4 connected to the electric power line via a filter reactor 2, a filter capacitor 3 connected to an input side of the traction converter 4, and a main motor 5 connected to an output side of the traction converter 4. A power converter 6 is composed of the filter reactor 2, the traction converter 4 and the filter capacitor 3.

In addition, an auxiliary power supply 8 is connected in parallel with the filter capacitor 3. In FIG. 1, the auxiliary power supply 8 is connected between the filter reactor 2 and the filter capacitor 3, but the auxiliary power supply can be disposed at any position as long as it is connected in parallel with the filter capacitor 3 between the power collector 1 and the traction converter.

Further, a switching device 90 is connected in parallel with the filter capacitor 3. The switching device 90 is formed by connecting an emitter of a first IGBT 9a and a collector of a second IGBT 9b, each IGBT having connected thereto in parallel a free wheel diode. The collector of the IGBT 9a is connected between the filter reactor 2 and the traction converter 4, and the emitter of the IGBT 9b is connected to a DC low potential side of the traction converter 4. An electric storage device 10 selected to have a lower terminal voltage than a minimum controllable DC input voltage value by the traction converter 4 and a main smoothing reactor 11 are connected between the collector and the emitter of the IGBT 9b. In FIG. 1, the switching element of the switching device 90 is illustrated as an IGBT, but the type of the switching element is not restricted thereto.

Further, a DC voltage detector 12 for detecting a voltage value (Vfc) of a contact point between the DC side of the traction converter 4 and the switching device 90, a secondary battery DC voltage detector 13 for detecting the value of terminal voltage (Vch) of the electric storage device 10, and an electric storage device DC current detector 14 for detecting the value of current (Ich) output from the electric storage device 10 to the collector of the IGBT 9b are disposed. Moreover, a charge-discharge controller 15 is connected to the switching device 90, a traction converter controller 16 is connected to the traction converter 4, an auxiliary power supply controller 17 is connected to the auxiliary power supply 8, an electric storage controller 18 is connected to the electric storage device 10, and an information transmission means 19 is disposed between the electric storage controller 18 and the charge-discharge controller 15. The electric storage controller 18 is arranged so as to detect the amount of charge and the inner temperature of the electric storage device 10, compute the maximum allowable charge-discharge current, and send these information to the charge-discharge controller 15.

Moreover, a revolution frequency signal f is output from a revolution frequency detector 22 for detecting the revolution frequency of the main motor 5, which is entered to a switching signal output device 23 and a travel distance computing device 24. It is also possible to adopt an arrangement in which the main motor 5 is a synchronous motor, wherein a rotation angle is detected instead of the revolution frequency, but in that case, the revolution frequency f can be computed based on the amount of change of rotation angle per unit time.

According to the present embodiment, the method utilizes the revolution frequency information of the main motor or the rotation angle information of the synchronous motor, but these signals can be replaced with any information related to the travel speed of the vehicle.

Further, a position signal sent from a ground coil 41 is entered via a pickup coil 40 to the switching signal output device 23, which can be used to determine whether the vehicle is traveling on a main line or in an inspection station.

By operating and stopping the switching device 90 based on the travel distance and the vehicle speed according to the above arrangement, it becomes possible to permit the switching operation of the switching device only when the vehicle enters the contact break section, and to stop the switching operation of the switching device 90 when the vehicle reenters the section in which contact break does not occur.

FIG. 11 is a view showing another arrangement of the switching signal output device 23 shown in FIG. 10.

In the third embodiment, the switching signal output device 23 has a contact break position storage device 25b storing in advance the position in which contact break occurs, and by entering the travel distance for verification thereto, whether or not the vehicle is traveling in a contact break section or not can be determined. When the system determines that the vehicle is traveling in a section where contact break occurs, the output of the contact break position storage device 25b is set to high level, and in contrast, when the system determines that the vehicle is traveling in a section where no contact break occurs, the output of the contact break position storage device 25b is set to low level.

Further, a revolution speed signal f output from a revolution frequency detector 22 is entered to a vehicle speed computing unit 42c, and the vehicle speed Vs is computed based on the revolution speed signal f. The vehicle speed Vs is compared with crossover section passing speed values Va and Vb set in advance and stored in the comparator 43c, and when the vehicle speed Vs is greater than Va and smaller than Vb, a high signal is output. Further, a position signal output from the pickup coil 40b is entered to a classifier 44d, and when the vehicle is traveling in a main line, the classifier 44d outputs a high signal. Then, a logic circuit 45f of AND operation outputs an AND operation of the signal of the comparator 43c and the classifier 44d, so as to output a high signal only when the vehicle is traveling on a main line and not exceeding a crossover section passing speed, and to output a low signal in other cases.

The output signal of the contact break position storage device 25b and the logic circuit 45f of AND operation is entered to a logic circuit of an OR operation, and the output of the logic circuit 45g of the OR operation is set as the switching signal K. According to this arrangement, the switching operation of the switching device 90 is only permitted when the vehicle is traveling at a crossover section passing speed in a crossover section, and when the vehicle is traveling in sections other than the crossover section, the switching operation of the switching device 90 can be stopped.

According to the present embodiment, as shown in FIG. 11, the output of the switching signal K is determined based on the travel distance information of the vehicle, the information related to travel speed, and the information related to travel position, but the vehicle clearly travels on a main line and not in an inspection station, the information related to travel position is not always necessary. In other words, whether it is necessary to output the switching signal K or not can be determined based on the travel distance information of the vehicle and the information related to the travel speed of the vehicle.

### [Embodiment 4]

The various embodiments described above illustrated examples for starting and stopping the switching operation of the switching device in response to the output of the switching signal K, but the present embodiment relates to stopping the switching operation of the switching device in response to the output of the switching signal K, and the switching operation of the switching device is started when starting the regeneration/powering operation of the vehicle.

When the vehicle travels in the contact break section at a constant speed or via coasting, the power supply to the auxiliary power supply 8 is interrupted, so that the filter capacitor voltage Vfc will drop rapidly, and when the vehicle travels in the contact break section via powering or regenerative braking operation, the filter capacitor voltage Vfc will fluctuate rapidly since a large power is required to accelerate or stop the vehicle. Therefore, the present embodiment focuses on suppressing the rapid fluctuation of the filter capacitor voltage Vfc when the vehicle travels via powering or regenerative braking operation in the contact break section.

The arrangement of the present embodiment is similar to embodiments 1 through 3. The difference between the present embodiment and embodiments 1 through 3 is that a trigger for outputting the high switching signal K is the starting information of regenerative braking or powering operation of the vehicle. The starting information of regenerative braking or powering operation utilize the information that the driver enters in a cab or the acceleration information of the vehicle acquired from an acceleration sensor.

According to the present embodiment, when the starting information of powering operation or regenerative braking operation is entered, the high switching signal K is output, and the switching operation of the switching device 90 is started. Thereafter, when the vehicle exists the contact break section, a low switching signal K is output and the switching operation of the switching device 90 is stopped, similar to embodiments 1 through 3.

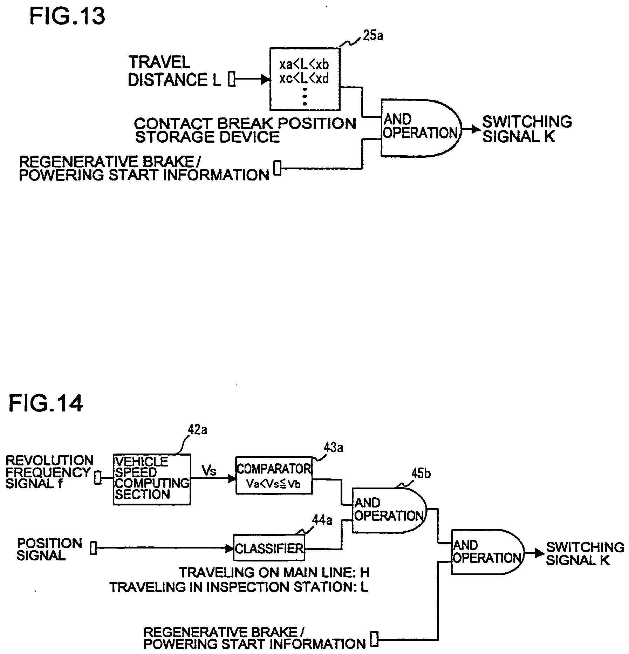

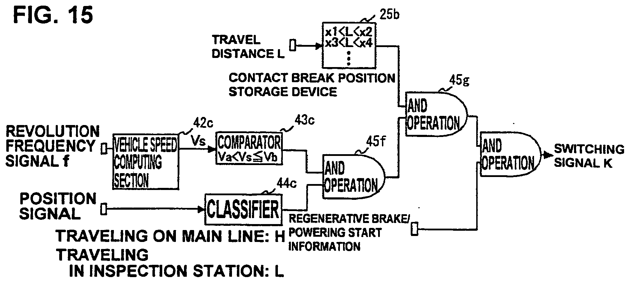

According to the present embodiment, when multiple contact break sections exist during a single powering operation or regenerative braking operation, there is a drawback in that the fluctuation of the filter capacitor voltage cannot be suppressed, but the drawback can be solved by setting the trigger for outputting the high switching signal K to an AND condition of starting information of regenerative braking or powering operation as shown in FIGS. 13, 14 and 15 and the travel information illustrated in FIGS. 1 through 3.

According to the present embodiment, the switching of the switching device can be stopped when the vehicle exits the contact break position, so that the period of switching operation can be shortened and energy loss due to switching operation can be suppressed.

In the above-mentioned embodiments, a delay element 39 is disposed as shown in FIG. 5, and when contact break occurs and the switching unit 38 is switched via the output signal of the slip-flop circuit 37, the filter capacitor voltage Vfc immediately prior to generation of contact break is output as the DC voltage command value Vref, but the DC voltage command value Vref does not necessary have to be the filter capacitor voltage immediately prior to generation of contact break, and it is only necessary to maintain the voltage value of the contact point of the power converter and the switching device to fall within a predetermined range.

## Claims

1. A control system of an electric vehicle comprising:
a power collector (1) for obtaining power from an electric power line;
a main motor (5) for driving wheels (21);
a power converter (6) for receiving power supply from the electric power line via the power collector and controlling the operation of the main motor;
an electric storage device (10) for supplying DC power to the power converter; and
a switching device (90) for controlling a conduction current between a DC portion of the power converter and the electric storage device; **characterized in that**
the system further comprises
a position storage device (25a) storing a travel position information of a contact break section; and
a switching signal output device (23) (i) outputting a switching signal for stopping the switching operation of the switching device, if it is determined that the electric vehicle is not travelling in the contact break section, as a result of matching a current travel position information of the electric vehicle and the travel position information of the contact break section stored in the position storage device, when the switching device is performing switching operation, and (ii) outputting a switching signal for activating the switching operation of the switching device, if it is determined that the electric vehicle is travelling in the contact break section, as a result of matching the current travel position information of the electric vehicle and the travel position information of the contact break section stored in the position storage device, and if a starting information of a regenerative braking operation or a powering operation is input, when the switching operation of the switching device is stopped.

2. The control system of an electric vehicle according to claim 1, **characterized in that**
the travel position information is a travel distance information computed via a travel distance computing device, or a travel position information detected via a GPS device, or a travel position information received from a ground coil.

3. The control system of an electric vehicle according to claim 1 or 2, further comprising
a voltage detector (12) for detecting a voltage of the DC portion of the power converter; and
when the switching signal output device is outputting a switching signal for activating the switching operation of the switching device and the voltage of the DC portion of the power converter is either greater or smaller than a predetermined range, the switching device performs control to maintain a voltage of the DC portion of the power converter to a voltage of the DC portion thereof before entering the contact break section.

## Patentansprüche

1. Steuersystem für ein elektrisches Fahrzeug umfassend:
einen Stromabnehmer (1) zum Gewinnen von Strom von einer elektrischen Stromleitung;
einen Hauptmotor (5) zum Antreiben von Rädern (21);
einen Stromwandler (6) zum Empfang einer Stromzufuhr von der elektrischen Stromleitung über den Stromabnehmer und zum Steuern des Betriebs des Hauptmotors;
eine elektrische Speichervorrichtung (10) zum Liefern von Gleichstrom an den Stromwandler; und
eine Schaltvorrichtung (90) zum Steuern eines Leitungsstroms zwischen einem Gleichstromabschnitt des Stromwandlers und der elektrischen Speichervorrichtung; **dadurch gekennzeichnet, dass**
das System außerdem Folgendes umfasst:
eine Positionsspeichervorrichtung (25a) zum Speichern von Fahrtpositionsinformationen für einen Kontaktunterbrechungsabschnitt; und
eine Schaltsignal-Ausgabevorrichtung (23), die (i) wenn als Ergebnis einer Abstimmung der gegenwärtigen Fahrtpositionsinformationen des elektrischen Fahrzeugs mit den in der Positionsspeichervorrichtung gespeicherten Fahrtpositionsinformationen des Kontaktunterbrechungsabschnitts festgestellt wird, dass das elektrische Fahrzeug nicht in dem Kontaktunterbrechungsabschnitt fährt, ein Schaltsignal zum Anhalten des Schaltbetriebs der Schaltvorrichtung ausgibt, wenn die Schaltvorrichtung einen Schaltbetrieb ausführt, und (ii) wenn als Ergebnis einer Abstimmung der gegenwärtigen Fahrtpositionsinformationen des elektrischen Fahrzeugs und der in der Positionsspeichervorrichtung gespeicherten Fahrtpositionsinformationen des Kontaktunterbrechungsabschnitts festgestellt wird, dass das elektrische Fahrzeug in dem Kontaktunterbrechungsabschnitt fährt und wenn eine Startinformation für einen regenerativen Bremsbetrieb oder einen Antriebsbetrieb eingegeben wird, ein Schaltsignal zum Aktivieren des Schaltbetriebs der Schaltvorrichtung ausgibt, wenn der Schaltbetrieb der Schaltvorrichtung angehalten ist.

2. Steuersystem eines elektrischen Fahrzeugs nach Anspruch 1, **dadurch gekennzeichnet, dass**
die Fahrtpositionsinformationen mittels einer Fahrstreckenberechnungsvorrichtung berechnete Fahrstreckeninformationen oder mittels einer GPS-Vorrichtung erfasste Fahrtpositionsinformationen oder von einer Bodenspule her gewonnene Fahrtpositionsinformationen sind.

3. Steuersystem eines elektrischen Fahrzeugs nach Anspruch 1 oder 2, weiterhin umfassend:
einen Spannungsdetektor (12) zum Erfassen einer Spannung des Gleichstromabschnitts des Stromwandlers; und
wobei dann, wenn die Schaltsignal-Ausgabevorrichtung ein Schaltsignal zum Aktivieren des Schaltbetriebs der Schaltvorrichtung ausgibt und die Spannung des Gleichstromabschnitts des Stromwandlers entweder größer oder kleiner als ein vorbestimmter Bereich ist, die Schaltvorrichtung eine Steuerung ausführt, um eine Spannung des Gleichstromabschnitts des Stromwandlers bei einer Spannung seines Gleichstromabschnitts vor Eintritt in den Kontaktunterbrechungsabschnitt zu halten.

## Revendications

1. Système de commande d'un véhicule électrique comportant :
un collecteur d'énergie (1) pour obtenir de l'énergie à partir d'une ligne d'énergie électrique,
un moteur principal (5) pour entraîner des roues (21),
un convertisseur d'énergie (6) pour recevoir une alimentation en énergie à partir de la ligne d'énergie électrique via le collecteur d'énergie et commander le fonctionnement du moteur principal,
un dispositif de stockage électrique (10) pour fournir de l'énergie en courant continu au convertisseur d'énergie, et
un dispositif de commutation (90) pour commander un courant de conduction entre une partie de courant continu du convertisseur d'énergie et le dispositif de stockage électrique, **caractérisé en ce que**
le système comporte en outre
un dispositif de stockage de position (25a) stockant une information de position de déplacement d'un tronçon d'ouverture de contact, et
un dispositif de sortie de signal de commutation (23) (i) délivrant en sortie un signal de commutation pour arrêter l'opération de commutation du dispositif de commutation, s'il est déterminé que le véhicule électrique ne se déplace pas dans le tronçon d'ouverture de contact, en résultat de la concordance d'une information de position de déplacement actuelle du véhicule électrique et de l'information de position de déplacement du tronçon d'ouverture de contact stockée dans le dispositif de stockage de position, lorsque le dispositif de commutation exécute une opération de commutation, et (ii) délivrant en sortie un signal de commutation pour activer l'opération de commutation du dispositif de commutation, s'il est déterminé que le véhicule électrique se déplace dans le tronçon d'ouverture de contact, en résultat de la concordance de l'information de position de déplacement actuelle du véhicule électrique et de l'information de position de déplacement du tronçon d'ouverture de contact stockée dans le dispositif de stockage de position, et si une information de début d'une opération de freinage par récupération ou d'une opération d'alimentation est appliquée en entrée, lorsque l'opération de commutation du dispositif de commutation est arrêtée.

2. Système de commande d'un véhicule électrique selon la revendication 1, **caractérisé en ce que**
l'information de position de déplacement est une information de distance de déplacement calculée par un dispositif de calcul de distance de déplacement, ou une information de position de déplacement détectée par un dispositif GPS, ou une information de position de déplacement reçue d'une bobine de terre.

3. Système de commande d'un véhicule électrique selon la revendication 1 ou 2, comportant en outre
un détecteur de tension (12) pour détecter une tension de la partie de courant continu du convertisseur d'énergie, et
lorsque le dispositif de sortie de signal de commutation délivre en sortie un signal de commutation pour activer l'opération de commutation du dispositif de commutation et que la tension de la partie de courant continu du convertisseur d'énergie est supérieure ou inférieure à une plage prédéterminée, le dispositif de commutation exécute une commande pour maintenir une tension de la partie de courant continu du convertisseur d'énergie à une tension de la partie de courant continu de celui-ci avant d'entrer dans le tronçon d'ouverture de contact.
